Europäisches Patentamt

(19) European Patent Office  (11) Publication number: **0 201 235**
Office européen des brevets  **B1**

(12) EUROPEAN PATENT SPECIFICATION

(45) Date of publication of the patent specification: (51) Int. Cl.⁴: **B 01 D 53/04**
01.03.89

(21) Application number: **86302963.3**

(22) Date of filing: **21.04.86**

(54) Separation of a gas mixture.

(30) Priority: **02.05.85 GB 8511128**
**15.05.85 GB 8512270**

(43) Date of publication of application:
**12.11.86 Bulletin 86/46**

(45) Publication of the grant of the patent:
**01.03.89 Bulletin 89/9**

(84) Designated Contracting States:
**BE DE FR IT NL**

(56) References cited:
**EP-A- 0 071 964**
**US-A- 3 149 934**
**US-A- 4 011 065**

(73) Proprietor: **The BOC Group plc, Chertsey Road,**
**Windlesham Surrey GU20 6HJ (GB)**

(72) Inventor: **Garrett, Michael Ernest, 92 York Road, Woking**
**Surrey (GB)**

(74) Representative: **Wickham, Michael et al, c/o Patent and**
**Trademark Department The BOC Group plc Chertsey**
**Road, Windlesham Surrey GU20 6HJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the separation of a gas mixture. It is particularly concerned with the separation of gas mixtures employing adsorbent material. By appropriate selection of the adsorbent it is known to separate a feed gas mixture into two gas streams, one relatively rich in the more readily adsorbed constituent or constituents of the gas mixture, the other relatively rich in the less readily adsorbed constituent or constituents of the gas mixture. Typically, one of the gas streams is taken as product and the other stream is vented to the atmosphere. Normally, a plurality of beds is employed, each bed being regenerated in turn.

A large number of processes for the separation of gas mixtures employ adsorbent in such a way. Typically, adsorption takes place at a relatively elevated pressure and the adsorbent is regenerated by subjecting it to a relatively low pressure. Such a mode of operation is attractive in its simplicity, but does involve large losses of energy and of the yield.

If these so called «pressure swing adsorption» processes for separating gas mixtures are analysed thermodynamically it will be seen that they involve the performance of a large quantity of irreversible work. It is an aim of the present invention to provide a more thermodynamically efficient methods and apparatus for separating gas using an adsorbent.

The method of gas separation set out below represents a major departure of the known art. In EP-A-71 964 there is disclosed a method of separating air which employs a single bed of adsorbent. Each end of the bed has a piston associated therewith. Air is continuously admitted to the bed and gas is withdrawn from the two ends of the bed. By driving the pistons out-of-phase with one another relatively large pressure fluctuations and rapid to-and-fro movements of the gas within the bed are created. As a result, separation of the air takes place.

According to the present invention, there is provided a method of separating a feed gas mixture into a first gaseous fraction and a second gaseous fraction, comprising performing the following cycle steps in repeated sequence:

(a) raising the pressure of a gas mixture which is resident in a bed of adsorbent capable of selectively adsorbing at least one constituent of the feed gas mixture and which comprises the same constituents as said feed gas mixture, and thereby adsorbing said at least one selectively adsorbable constituent;

(b) performing a first translation at approximately constant pressure of the unadsorbed gas in one direction;

(c) reducing the pressure of the gas in the bed and thereby desorbing previously adsorbed gas from the adsorbent;

(d) performing a second translation at approximately constant pressure of the gas in the bed in a direction opposite to the direction of translation in step (b),

characterised in that during the repeated performance of said steps first and second gaseous fractions of different composition from each other and from the feed gas mixture are withdrawn and the feed gas mixture for separation flows into the bed at a region intermediate its ends, gas is admitted to adsorbent bed discontinuously in increments, the pressure raising step is performed by allowing gas to flow into the adsorbent bed from a reservoir associated with one end of the bed by virtue of a pressure difference between the reservoir and the bed, so as to make a fractional increase in the bed pressure, no gas being discharged from the bed during this step, the first translation is performed by continuing to allow gas to flow into the adsorbent bed from the reservoir but allowing a substantially equal quantity of gas to be displaced from the other end of the bed whereby an increment of gas is translated through the bed, at least some of which displaced gas flows into another reservoir associated with that end, the pressure reduction step is performed by pumping gas from said one end of the bed into the reservoir associated with that end so as to make a fractional decrease in the bed pressure, and the second translation is performed by continuing to pump gas into the reservoir associated with said one end of the bed but allowing a substantially equal quantity of gas to flow into said bed from the reservoir associated with said other end whereby an increment of gas is translated through the bed.

In order to maximise the use made of a mechanical pump employed to carry out such pumping, feed gas may be separated in two separate, parallel beds operating out-of-phase with one another such that steps (a) and (b) of a cycle are performed on one bed, while steps (c) and (d) are performed on the other and vice versa. If desired, the ends of the respective columns served by the pump may share a common reservoir. Any convenient kind pump may be employed. The invention thus does not reply on the use of reciprocating machinery.

In separating a binary mixture into a first gaseous fraction rich in the more readily adsorbed constituent of the mixture and a second gaseous fraction rich in the less readily adsorbed constituent of the mixture, the outlets for the gaseous fractions are preferably associated with the respective ends of the adsorbent bed.

The volume of gas translated during each first and each second translation is small compared with the free gas space in said bed. Moreover, the difference between the pressure that obtains in the bed at the end of each step (a) and the pressure that obtains in the bed at the end of each step (c) is preferably small compared with the former of these pressures. Thus, in preferred methods according to the invention, there is no rapid to-and-fro flow of gas between say the top of an adsorption bed and the lower half of the bed. Rather, there is in effect a net gradual passage of the more adsorbable constituent or constituents of the gas mixture towards one end of the bed and a net gradual passage of the less adsorbable constituent or constituents towards the other end of the bed even though each complete cycle of steps (a) to (d) may only take say a few seconds (or less) to complete. Consider the example of the separation of air (purified by the removal of water vapour and carbon dioxide) in a vertical bed of carbon molecular sieve of the kind that adsorbs oxygen more rapidly than ni-

trogen. During the pressure raising step of the method there is adsorption of oxygen and hence a direct (and say) upward flow of the unadsorbed gas. This upward flow is greater than that which would be predicted from a mere consideration of the «pressure swing» that takes place between the start and end of each pressure raising step. The extent of the upward flow is increased since oxygen is adsorbed. Translation in the same direction then takes place. There is thus further upward flow of the unadsorbed gas and some of this gas will enter the reservoir associated with the top of the bed. The pressure reduction step results in desorption of oxygen and a downward flow of gas comprising unadsorbed nitrogen and desorbed oxygen. The downward flow of nitrogen is not as great as that which would be predicted by mere consideration of the «pressure swing» that takes place between the start and end of each pressure reduction step. The extent of the downward flow is decreased by the desorbing of oxygen. Further downward flow of gas takes place during the second translation step. Considering now the cycle as a whole, there is a net upward flow of unadsorbed gas (nitrogen) and a net downward flow of adsorbed gas (oxygen). Introduction of air into the bed and withdrawal of relatively pure oxygen and nitrogen fractions is arranged so as not to prevent the establishment in the bed of such a flow regime. Since there is a net upward flow of nitrogen the gas and a net downward flow of oxygen, the gas mixture in the bed tends to be relative rich in oxygen at the bottom of the bed, and then to become progressively leaner in oxygen as one ascends the bed with a relatively nitrogen-rich fraction obtaining at the top of the bed. Thus, oxygen-rich gas collects in one reservoir and nitrogen-rich gas in the other reservoir.

The pressure in the bed during each of the first and second translation steps preferably deviates very little from a constant value, whereby the amount of irreversible work that is performed in the bed during these steps is kept to a minimum. Accordingly, a separation of the gas mixture relatively efficient thermodynamically in comparison with conventional pressure swing adsorption processes for the separation of gas mixtures is made possible. Such deviations as do take place during the first translation should be in the direction of increasing the pressure, and such deviations as do take place during the second translation should be in the direction of reducing the pressure.

Introduction of the feed gas mixture for separation extraction of the first and second gaseous fractions may be carried out in any convenient part of the cycle. Preferably, feed gas mixture is introduced into the bed in a discrete step immediately following the second isobaric displacement step and immediately preceding the pressure raising step. The volume of the feed gas introduced per cycle of operations is preferably small compared with the free gas space in the bed. Preferably, the introduction of the feed gas into the bed is performed such that the pressure deviates in the bed very little from a constant value and that the pressure is returned to its value at the start of step (a) of the method. During each operating cycle, the volume of gas withdrawn as product preferably equals the volume of gas introduced into the bed for separation during each operating cycle. The first and second gaseous fraction can be extracted from the bed at any convenient time during each operating cycle. For example, a first gaseous fraction rich in the preferentially adsorbed gas may be taken for at least part of the time in which feed gas mixture is introduced into the bed for separation and a second gaseous fraction relatively rich in the less preferentially adsorbed constituent or constituents of the feed gas mixture may be withdrawn as product during at least part of the first translation step. It is generally arranged for the pressure in the gas reservoirs to be superambient and thus it is possible to withdraw the products at any time or continuously.

Typically, the pressure swing involved in each operating cycle is in the order of 5 psi, and the volume of gas translated in each translation step is less than 5% of the total bed capacity.

The method according to the present invention will now be further described by way of example with reference to the accompanying drawings, in which:

Figure 1 is a schematic drawing of one plant including a single column for separating air according to the present invention.

Figure 2 is a schematic drawing illustrating a second plant, including two adsorption columns, for separating air in accordance with the invention;

Figure 3 is a schematic drawing of yet another plant for performing the present invention;

Figure 4 is a schematic drawing of another plant for performing the present invention.

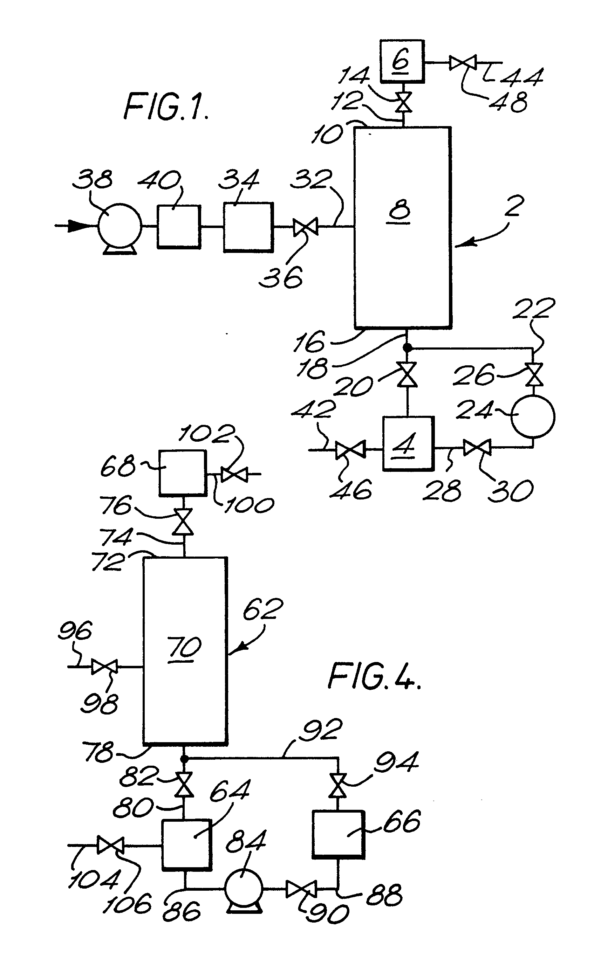

Referring to Figure 1 of the drawings, a plant for the separation of air includes a column 2, a first reservoir 4, and a second reservoir 6. The column 2 and reservoirs 4 and 6 are constructed as pressure vessels. The column 2 contains a bed 8 of carbon molecular sieve capable of preferentially adsorbing oxygen from a gas mixture comprising oxygen and nitrogen. The bed 8 occupies substantially the whole internal volume of the column 2. The top end 10 of the bed 8 communicates with a conduit 12 which extends from the top of the column 2 to the second reservoir 6. A valve 14 is located in the conduit 12. The bottom end 16 of the bed 8 communicates with a conduit 18 which extends from the bottom of the column 2 to the first reservoir 4. A valve 20 is located in the conduit 18. A conduit 22 terminates at one end in the conduit 18 at a region thereof intermediate the valve 20 and the bottom of the column 2 and at its other end in the inlet to a pump 24. A valve 26 is located in the conduit 22. A further conduit 28 extends from the outlet of the pump 24 and terminates in the reservoir 4. A valve 30 is located in the conduit 28.

The column 2 is also provided with an inlet 32 for compressed and dried air to be separated. Such air is supplied from a third reservoir 34. The reservoir 34 is constructed as a pressure vessel. The oulet of the reservoir 34 communicates with the inlet 32 and is provided with a valve 36. The inlet of the reservoir 34 communicates with the outlet of air compressor 38 via conventional means for removing water, particulates and carbon dioxide located at 40.

The reservoirs 4 and 6 are provided with outlets 42 and 44 respectively having valves 46 and 48 respectively disposed therein.

All the above mentioned valves may be pneumatically or hydraulically operated and the relative timings of their opening and closing may be effected by means of a central programmable controller (not shown) of a kind conventional in the art.

In operation, with the pressure in the bed 8 and reservoir 6 being equal to one another at a value below that in the reservoir 4, with the reservoir 4 containing oxygen-rich gas and the reservoir 6 containing nitrogen-rich gas, with the void spaces in the bed 8 containing a gas mixture comprising nitrogen and oxygen, with a flow of air just having been admitted to the bed 8 via the inlet 32, with some oxygen product just having been withdrawn from the reservoir 4 through the conduit 42, and with the valves 36 and 46 just having been closed and the valve 20 opened, gas flows from the reservoir 4 into the bed 8 by virtue of the pressure difference therebetween. Thus the gas in the bed 8 is compressed and a proportion of the oxygen in the bed is adsorbed in consequence of the increasing pressure in the bed 8. As a result of the increasing pressure in the void spaces of the bed 8 and the removal of some oxygen from these void spaces by virtue of its adsorption there is an upward flow of nitrogen molecules in the void spaces of the bed.

Appreciably before the pressure in the reservoir 4 equalises with the pressure in the bed 8, the valve 14 is opened and gas thus flows from the bed 8 into the reservoir 6. The continuing flow of gas into the bed 8 from the reservoir 4 approximately balances the flow of gas out of the bed 8 into the reservoir 6 so that the pressure in the bed 8 increases only slightly during the time that the valve 14 is open. Thus, during this time there is an upward translation or displacement of unadsorbed gas, but the oxygen that has been previously adsorbed during the previous compression step remains adsorbed. There is thus a net upward displacement of nitrogen relative to oxygen during the compression and upward translation steps.

For a period during the upward displacement step, nitrogen is withdrawn from the reservoir 6 via the outlet 44. To this end, valve 48 is opened and nitrogen is allowed to flow under pressure from the reservoir 6 to a suitable collection vessel (not shown). Typically the withdrawal of nitrogen product takes place during the latter half of the upward displacement step.

In order to maintain approximately isobaric conditions in the bed 8 during the upward displacement step the flow of gas into the bed 8 from the reservoir 4 is maintained as close to equality as possible with the flow of gas out of the bed 8 into the reservoir 6. Thus, the difference between the pressure in the reservoir 4 and the bed 8 and the difference between the pressure in the bed 8 and the reservoir 6 at the start of the upward translation step are chosen so as to ensure that approach closely to equality throughout the upward translation step.

Typically, but not necessarily, the upward translation step continues until the pressures in the reservoirs 4 and 6 and the bed 8 become equal with one another. Valves 14, 20 and 44 close and valves 26 and 30 open so as to start pressure reduction step. Throughout this step the pump 24 is operated to withdraw gas from the bottom of bed 8 and to pass into the reservoir 4. The pressure in the bed 8 thus falls causing some oxygen molecules to be desorbed from the adsorbent and then to flow downwards through the bed 8. There is thus a net downward flow of oxygen. The gas in the voids spaces at the start of the pressure reduction step flows downwards during this step by a distance which is less than that which would be expected from a mere consideration of the pressure obtaining at the start of this step and the pressure obtaining at the end of this step. This is because some of the downward flow of gas that takes place during the pressure reduction step is constituted by oxygen that is desorbed. The pressure reduction step is concluded when the pressure in the bed reaches the value that obtained at the start of the foregoing pressure raising step. In that step there was an enhanced upward flow of unadsorbed gas as a result of the adsorption of some oxygen molecules. Comparing the pressure reduction step with the pressure raising step it can thus be seen that there is an overall upward flow of unadsorbed gas and an overall downward flow of adsorbed gas. Thus there is a net upward flow of nitrogen and a net downward flow of oxygen.

The duration of the pressure reduction step is typically arranged to be equal to the duration of the pressure raising or compression step. Change over from pressure reduction to isobaric downward translation of gas in the void spaces of the bed 8 is effected by opening valve 14. It is to be appreciated that during the pressure reduction step a pressure difference between the reservoir 6 and the bed 8 is built up. During the downward translation step, gas flows from the reservoir 6 into the void spaces of the bed 8 to take the place of the gas that is withdrawn from the void spaces of the bed 8 by the pump 24. Thus approximately isobaric conditions with the bed pressure falling only slightly are able to be maintained in the bed 8 during the downward translation. During the downward translation step there is a downward flow of oxygen molecules previously desorbed during the pressure reduction step. When the pressure in the reservoir 6 reaches equality with that in the void spaces of the bed, the valve 14 is closed and the valve 36 opens to admit compressed dry air which is free of carbon dioxide into the bed 8 at an intermediate level. If desired, the pressure of the incoming air may be selected to be a little in excess of the pressure that obtains at the instant the valve 14 is closed and the valve 36 opens. It is thus possible to maintain a pressure in the bed 8 that deviates only slightly from a constant value even though gas continues to be withdrawn therefrom by the pump 24. For at least a part of the period in which air is admitted to the bed oxygen product is withdrawn from the reservoir 4. To this end, the valve 46 is opened and the reservoir 4 placed in communication with for example a storage vessel for product oxygen (not shown). The volumes of nitrogen product and oxygen product withdrawn during each cycle are equal to the volume of air admitted during each cycle. The ratio of volume of nitrogen product to volume of oxygen product withdrawn during each cycle is arranged to approximate to the ratio of nitrogen to oxygen in the incoming air, and the reservoirs 6 and 4 have a similar volume ratio.

The total duration of each downward displacement step and the following air admission step is typically arranged to be equal to the duration of each upward displacement step. The pressure of the bed 8 at the end of the air feed step equals that at the start of the preceding pressure raising or compression step.

As the downward translation step proceeds so the pressure in the reservoir 4 is built up and thus by the end of the air admission step a pressure in the reservoir has been established that is sufficient to enable the next pressure raising (or compression) and upward displacement steps to be carried out.

To bring the air admission step to an end, the valves 26, 30, 36 and 46 are closed; and the valve 20 is simultaneously opened to commence the next pressure raising or compression step. Thus, the above described cycle of steps may be continuously repeated.

Considering now the volume of air that is admitted to the bed during the air admission step of the cycle, this volume will initially flow downwards. A «band» of «new» air is thus established in the column immediately below the level of the inlet 32. During the following compression step there is a small upward displacement of this air and, moreover, at least some of the molecules are adsorbed. There is thus a net upward displacement of nitrogen molecules relative to oxygen molecules as the action of the adsorbent in adsorbing oxygen molecules from the air band starts with the commencement of the compression step. In the following upward translation step the oxygen molecules remain adsorbed and the remainder of the air band is displaced upward. Thus the net upward displacement of the nitrogen molecules relative to the oxygen molecules increases. In the pressure reduction or expansion step the previously adsorbed oxygen molecules are desorbed and thus enter the void spaces of the bed at the positions where they were initially adsorbed. The desorbed oxygen molecules limit the downward displacement of the previously unadsorbed portion of the air band to a small extent so that the downward flow of unadsorbed gas molecules during the expansion step does not quite match the upward displacement of unadsorbed gas molecules during the previous compression step. The downward displacement step then takes place, during which step the air band now relatively rich in oxygen at its lower front flows downwards. There is thus a net downward flow of oxygen molecules and a net upward flow of nitrogen molecules. In other words during one operating cycle the incoming air band has been re-ordered so that it no longer contains uniform concentrations of oxygen and nitrogen but instead has a greater concentration of oxygen molecules towards its lower «fringe» and a greater concentration of ·nitrogen molecules towards its upper «fringe». Moreover, the initial «band» has become spread with the upper fringe of the band (which is relatively rich in nitrogen) being situated above the level of the inlet 32 by a distance corresponding to the extent of upward flow or displacement, and the lower «fringe» of the band having been displaced downwards by a distance corresponding to the extent of the downward flow in the cycle. It can thus be seen that in one operating cycle there has been a downward flow of oxygen molecules and an upward flow of nitrogen molecules. Considering now the next complete cycle, by analogy with the first cycle, it can be seen that the «oxygen-rich» fringe will be displaced downwards and further enriched in oxygen, while the «nitrogen-rich» fringe will be displaced upwards and further enriched in nitrogen. While it is possible to arrange the apparatus such that the «oxygen-rich» fringe could reach the bottom of the column and the «nitrogen-rich» fringe the top of the column in say one or two cycles no advantages accrues from such a procedure. Indeed, the thermodynamic efficiency of the process for example in terms of specific power consumption tends to increase the greater the number of individual operating cycles it takes for the initial air band to be separated into nitrogen rich gas at the top of the column 2 and oxygen-rich gas at the bottom of the column 2. Thus, it is preferable for the «pressure swing» between the pressure at the start and end of the compression step to be small and the volume of gas entering or leaving the bed to and from the reservoirs to be only a small increment of the total volume of the bed. Although this has the consequence that the degree of enrichment achieved by one operating cycle may be small, and the «pressure swing» small, say a few psi, by allowing each increment of gas admitted to the bed to be in effect subjected to a multiplicity of operating cycles (typically more than ten), nitrogen and oxygen products of acceptable commercial purity may be produced by the method according to the invention. In this respect the invention is a radical departure in the art as prior processes have relied upon only one or a few operating cycles to effect separation.

The operating pressure will typically be chosen in accordance with the desired product pressure, typically 2 to 4 bars.

It may help towards a better understanding of the invention to draw an analogy between the column 2 and a rectification column of the kind typically used to separate mixtures of oxygen and nitrogen formed from air by initial extraction of water vapour and carbon dioxide. In a rectification column, a descending liquid phase undergoes mass transfer with an ascending phase. As the vapour phase ascends the column so it becomes richer in nitrogen (the more volatile constituent) and as the liquid phase descends the column so it becomes richer in oxygen (the less volatile constituent). Thus liquid oxygen collects at the bottom of the column and nitrogen vapour rises to the top of the column. In the method according to the invention, the gas in the void spaces of the bed 8 is progressively richer in oxygen (the preferentially adsorbed constituent) as one descends the column end progressively rich in nitrogen as one ascends the column.

The invention is not limited to the use of carbon molecular sieve. Suppose a zeolite which is suitable for separation of nitrogen-oxygen mixtures and which adsorbs nitrogen in preference to oxygen is employed. Then, nitrogen-enriched air is collected at the bottom of the bed and oxygen-enriched air is collected at the top of the bed.

It is not possible to obtain both an absolutely pure oxygen fraction and an absolutely pure nitrogen fraction in the method according to the invention. Quite apart from the argon content of the air (which will tend to be collected in the unadsorbed gas fraction), a perfect separation is not possible. The operating parameters of the method and the positions of the outlets may thus be selected according to the desired purity of the respective fractions.

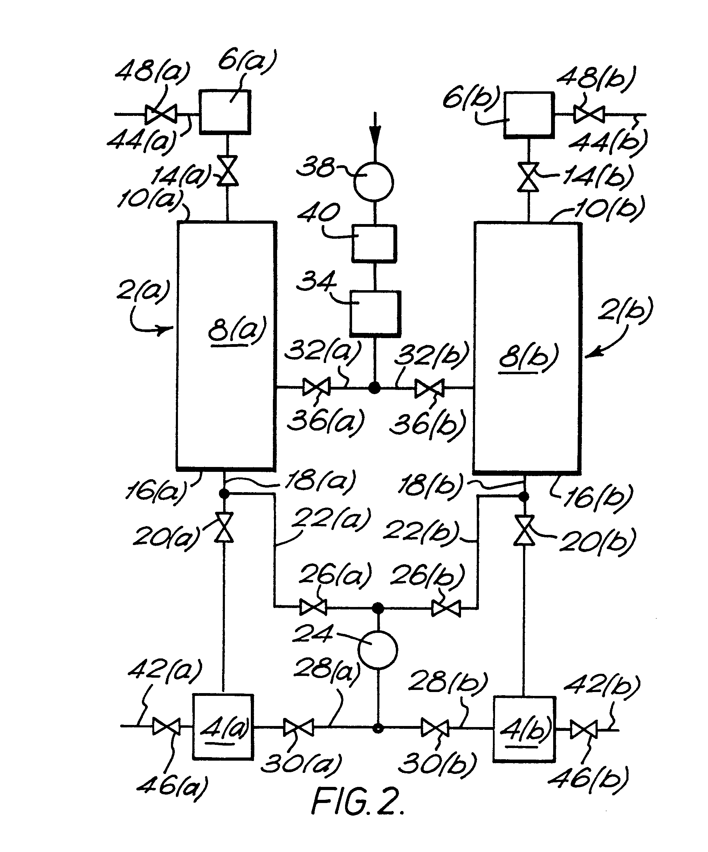

In order to utilise the pump 24 fully, two or more columns may be operated out of phase with one another to separate air. Referring now to Figure 2 of the accompanying drawings, a plant comprising two columns is illustrated. Like parts in Figures 1 and 2 are identified by the same reference numerals. The suffix (a) and the suffix (b) are used in Figure 2 to distinguish between the two columns.

The two columns 2(a) and 2(b) share a common source of compressed and purified air, as described with reference to Figure 1. When the bed 8(a) is being subjected to the compression step, the bed 8(b) is being subjected to the expansion or pressure reduction step, and vice versa. During the time that the bed 8(a) is subjected to the upward translation step, the bed 8(b) is subjected to the downward translation step and air feed steps, and vice versa. It is therefore necessary for each compression step to have the same duration as each pressure reduction step and for each upward translation step to have the same duration as each combined downward translation and air feed step so as to avoid discontinuous use of the pump, although such use may be reduced by means of a suitable buffer. The pump 24 has two inlet conduits 22(a) and 22(b) respectively and two outlet conduits 28(a) and 28(b) respectively. Thus, the pump 24 withdraws gas from the bed 8(a) and passes it to the reservoir 4(a) during the downward translation and air feed steps performed using the bed 8(a), and once the air feed step has ended the pump then withdraws gas from the bed 8(b) and passes it to the reservoir 4(b) during the downward translation and air feed steps performed using the bed 8(b). Thus, the pump is able to be used continuously.

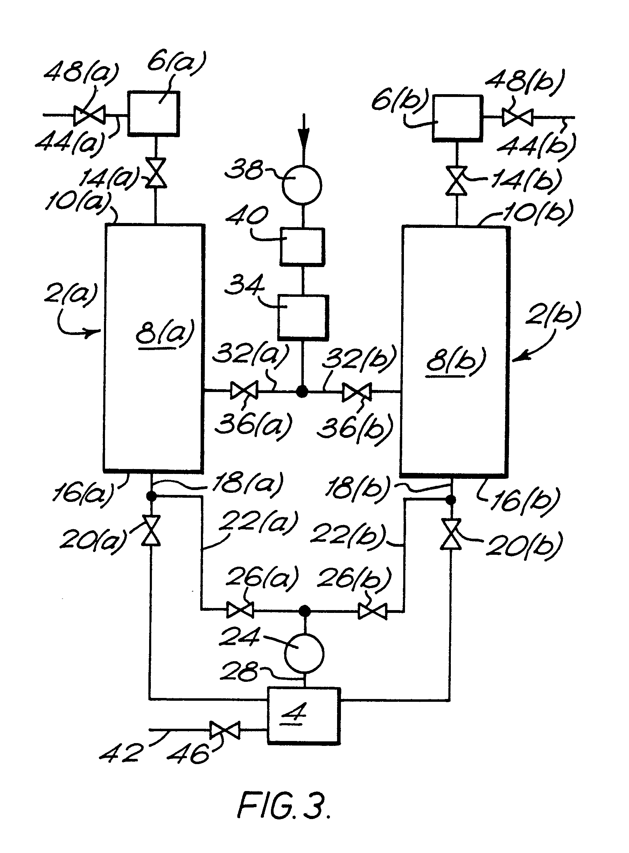

The plant shown in Figure 3 is identical to that shown in Figure 2 save that the two reservoirs 4(a) and 4(b) are replaced by a common reservoir 4. Operation of the plant shown in Figure 3 is therefore identical to that shown in Figure 2.

The plant shown in Figure 4 is generally similar to that shown in Figure 1 save that a different arrangement is employed to withdraw gas from the bottom of the adsorption bed and to return it to the bed. A key feature of this different arrangement is that a vacuum pump such as a Roots blower is employed to subject the adsorption bed to a vacuum during the downward translation and air feed steps.

The plant shown in Figure 4 has a vertical column 62, reservoirs 64 and 66 associated with the lower end of the column 62 and a reservoir 68 associated with the upper end of the column 62. The column 62 contains a bed 70 of carbon molecular sieve capable of preferentially adsorbing oxygen from a gas mixture comprising oxygen and nitrogen. The bed 70 occupies substantially the whole internal volume of the column 62. The top end 72 of the bed 70 communicates with a conduit 74 which extends from the top of the column 62 to the reservoir 69. A valve 76 is located in the conduit 74. The bottom end 78 of the bed 70 communicates with a conduit 80 which extends from the bottom 78 of the column 62 to the top of a reservoir 64. A valve 82 is located in the conduit 80. The bottom of the reservoir 64 is connected to the inlet of a Roots blower 84 by a conduit 86. The outlet of the Roots 84 is connected by a conduit 88 to the lower end of the reservoir 66. A valve 90 is located in the conduit 88. A conduit 92 extends from the upper end of the reservoir 66 and terminates in the conduit 80 intermediate the valve 82 and the column 62. The valve 94 is located in the conduit 92.

The column 62 is also provided with an inlet 96 for compressed, purified air. The air may be compressed and purified by conventional plant, for example, of the kind shown in Figure 1 for this purpose. The inlet 96 is provided with a valve 98. The reservoir 68 is provided with an outlet 100 having a valve 102 disposed therein and the reservoir 64 is provided with an outlet 104 having a valve 106 disposed therein.

All the above mentioned valves may be pneumatically or hydraulically operated and the relative timings of their opening and closing may be effected by a central programmable controller (not shown) of a kind conventional in the art.

The operation of the plant shown in Figure 4 is generally similar to that shown in Figure 1 and will not be described again in detail, but some differences do arise as a result of the different arrangement of reservoirs associated with the bottom of the column. Thus, the pressure raising step is carried out with all valves closed save the valve 94 so that gas flows from the reservoir 66 through the conduit 92 into the bed 70. The upward translation step is initiated by opening the valve 76 and allowing gas to flow into the reservoir 68 from the bed 70 and thereby maintaining isobaric conditions in the bed 70. Product nitrogen is withdrawn during this step through outlet 100 and the valve 102 is opened to enable such withdrawal to take place. The pressure reduction step is initiated by opening valves 82 and 90 (simultaneously with the closing of valves 94 and 74) and operating the Roots blower 84 so as to withdraw gas from the bed 70 via the reservoir 64 and to pass this gas to the reservoir 66. The downward translation step commences with the opening of valve 76. At the end of the downward translation step the valve 76 closes and valve 98 opens to admit air (free of carbon dioxide and water vapour) into the bed. During this step, the valve 106 is opened and product oxygen is withdrawn. The cycle of operations is performed repeatedly.

## Claims

1. A method of separating a feed gas mixture into a first gaseous fraction and a second gaseous fraction, comprising performing the following cycle of steps in repeated sequence:

(a) raising the pressure of a gas mixture which is resident in a bed of adsorbent capable of selectively adsorbing at least one constituent of the feed gas mixture and which comprises the same constituents as said feed gas mixture, and thereby adsorbing said at least one selectively adsorbable constituent;

(b) performing a first translation at approximately constant pressure of the unadsorbed gas in one direction;

(c) reducing the pressure of the gas in the bed and thereby desorbing previously adsorbed gas from the adsorbent;

(d) performing a second translation at approximately constant pressure of the gas in the bed in a direction opposite to the direction of translation in step (b),

characterised in that during the repeated performance of said steps first and second gaseous fractions of different composition from each other and from the feed gas mixture are withdrawn and the feed gas mixture for separation flows into the bed at a region intermediate its ends, gas is admitted to adsorbent bed discontinuously in increments, the pressure raising step is performed by allowing gas to flow into the adsorbent bed from a reservoir associated with one end of the bed by virtue of a pressure difference between the reservoir and the bed, so as to make a fractional increase in the bed pressure no gas being discharged from the bed during this step, the first translation is performed by continuing to allow gas to flow into the adsorbent bed from the reservoir but allowing a substantially equal quantity of gas to be displaced from the other end of the bed whereby an increment of gas is translated through the bed, at least some of which displaced gas flows into another reservoir associated with that end, the pressure reduction step is performed by pumping gas from said one end of the bed into the reservoir associated with that end so as to make a fractional decrease in the bed pressure, and the second translation is performed by continuing to pump gas into the reservoir associated with said one end of the bed but allowing a substantially equal quantity of gas to flow into said bed from the reservoir associated with said other end whereby an increment of gas is translated through the bed.

2. A method according to claim 1, further characterised in that the feed gas mixture is introduced into said bed after said second translation step has been terminated by stopping flow into the bed from the reservoir associated with said other end of the bed, and introduction of said feed gas mixture into the bed is stopped before starting the next pressure raising step.

3. A method according to claim 2, in which the pressure in the bed is maintained substantially constant during said introduction of the air feed.

4. A method according to any preceding claim, in which the feed gas mixture is air from which water vapour and carbon dioxide has been removed.

5. A method according ot any preceding claim, further characterised in that each increment of gas admitted to the bed is on average subjected to at least 10 operating cycles.

**Patentansprüche**

1. Verfahren zum Trennen eines zugeführten Gasgemisches in eine erste gasförmige Fraktion und eine zweite gasförmige Fraktion, bei dem der nachfolgenden Zyklus von Verfahrensschritten in wiederholter Folge ausgeführt wird:

(a) es wird der Druck eines Gasgemisches erhöht, welches in einer Adsorbenten-Schicht vorhanden ist, die fähig ist, selektiv mindestens einen Bestandteil des zugeführten Gasgemisches zu adsorbieren, und welches die gleichen Bestandteile wie das zugeführte Gasgemisch umfaßt, und dadurch den mindestens einen selektiv adsorbierbaren Bestandteil adsorbiert;

(b) es wird eine erste Verschiebung des nicht-adsorbierten Gases in einer Richtung bei annähernd konstantem Druck durchgeführt;

(c) es wird der Druck des Gases in der Schicht reduziert und dadurch das vorher adsorbierte Gas von dem Adsorbenten desorbiert;

(d) es wird eine zweite Verschiebung des Gases in der Schicht in einer Richtung entgegengesetzt zu der Verschiebungsrichtung in Schritt (b) bei annähernd konstantem Druck durchgeführt,

dadurch gekennzeichnet, daß während des wiederholten Ausführens der Verfahrensschritte erste und zweite gasförmige Fraktionen mit gegeneinander unterschiedlicher Zusammensetzung aus dem zugeführten Gasgemisch abgezogen werden und das zugeführte Gasgemisch zur Trennung in einem mittleren Bereich in die Schicht einströmt, daß Gas zu der Adsorbenten-Schicht diskontinuierlich in Schritten zugelassen wird, daß das Anheben des Druckes dadurch ausgeführt wird, daß Gas in die Adsorbenten-Schicht aus einem einem Ende der Schicht zugeordneten Behälter strömen gelassen wird infolge eines Druckunterschiedes zwischen dem Behälter und der Schicht, um so einen fraktionellen Anstieg des Druckes in der Schicht herzustellen, während welches Vorganges kein Gas aus der Schicht entlassen wird, daß die erste Verschiebung ausgeführt wird durch Fortsetzen des Strömenlassens von Gas von dem Behälter in die Adsorbentenschicht, wobei jedoch eine Verschiebung einer im wesentlichen gleichen Menge des Gases von dem anderen Ende der Schicht zugelassen wird, wodurch ein Gasschub durch die Schicht verschoben wird, daß mindestens etwas von dem verschobenen Gas in einen anderen, jenem Ende zugeordneten Behälter fliesst, daß die Herabsetzung des Druckes durch Abpumpen von Gas von dem einen Ende der Schicht in den mit diesem Ende zugeordneten Behälter ausgeführt wird, um so eine fraktionelle Erniedrigung des Schichtdruckes herzustellen, und daß die zweite Verschiebung durch Fortsetzen des Pumpens von Gas in den dem einen Ende der Schicht zugeordneten Behälter ausgeführt wird, wobei jedoch das Strömen einer im wesentlichen gleichen Gasmenge in die Schicht aus dem dem anderen Ende zugeordneten Behälter zugelassen wird, wodurch ein Gasschub durch die Schicht verschoben wird.

2. Verfahren nach Anspruch 1, weiter dadurch gekennzeichnet, daß das zugeführte Gasgemisch in die Schicht eingeführt wird, nachdem die zweite Verschiebung beendet wurde durch Anhalten der Strömung aus dem dem anderen Ende der Schicht zugeordneten Behälter in die Schicht, und daß das Einführen des zugeführten Gasgemisches in die Schicht angehalten wird, bevor der nächste Druckanstieg begonnen wird.

3. Verfahren nach Anspruch 2, bei dem der Druck in der Schicht während des Einführens der Luftzufuhr im wesentlichen konstant gehalten wird.

4. Verfahren nach einem der vorangehenden Ansprüche, bei dem das zugeführte Gasgemisch Luft ist, von der Wasserdampf und Kohlendioxid entfernt wurden.

5. Verfahren nach einem der vorangehenden Ansprüche, weiter dadurch gekennzeichnet, dass jeder zu der Schicht zugelassene Gasschub durchschnittlich mindestens 10 Betriebszyklen unterworfen wird.

## Revendications

1. Procédé de séparation d'un mélange d'alimentation en une première et une seconde fraction gazeuse, comprenant l'exécution du cycle suivant d'étapes, avec une séquence qui se répète:

(a) l'élévation de la pression d'un mélange gazeux qui réside dans un lit d'un adsorbant capable d'adsorber sélectivement au moins un constituant du mélange gazeux d'alimentation et qui contient les mêmes constituants que le mélange gazeux d'alimentation, avec adsorption de cette manière du constituant au moins qui est adsorbable sélectivement,

(b) l'exécution d'une première translation dans un premier sens à une pression approximativement constante du gaz non adsorbé,

(c) la réduction de la pression du gaz dans le lit et ainsi la désorption du gaz antérieurement adsorbé de l'adsorbent, et

(d) l'exécution d'une seconde translation à une pression approximativement constante du gaz dans le lit en sens opposé au sens de la translation de l'étape (b),

caractérisé en ce que, pendant l'exécution répétée des étapes, la première et la seconde fraction gazeuse de compositions différentes l'une de l'autre et du mélange gazeux d'alimentation sont extraites et le mélange gazeux d'alimentation destiné à être séparé s'écoule dans le lit dans une région comprise entre ses extrémités, du gaz est admis dans le lit d'adsorbant de manière discontinue, par quantités élémentaires, l'étape d'élévation de pression est réalisée par circulation naturelle du gaz dans le lit d'adsorbant à partir d'un réservoir associé à une première extrémité du lit sous l'action d'une différence de pression existant entre le réservoir et le lit, afin que la pression du lit subisse une augmentation fractionnaire, aucune quantité de gaz n'étant évacuée du lit pendant cette étape, la première translation est réalisée par poursuite de la circulation naturelle du gaz dans le lit d'adsorbant à partir du réservoir, avec déplacement d'une quantité sensiblement égale du gaz depuis l'autre extrémité du lit de manière qu'une quantité élémentaire de gaz subisse une translation dans le lit, une certaine quantité au moins du gaz déplacé s'écoule dans un autre réservoir associé à cette extrémité, l'étape de réduction de pression est réalisée par pompage du gaz provenant de la première extrémité du lit dans le réservoir associé à cette extrémité afin que la pression du lit subisse une réduction fractionnaire, et la seconde translation est réalisée par poursuite du pompage du gaz dans le réservoir associé à la première extrémité du lit, mais avec écoulement d'une quantité sensiblement égale du gaz dans le lit à partir du réservoir associé à l'autre extrémité, si bien qu'une quantité élémentaire de gaz subit une translation dans le lit.

2. Procédé selon la revendication 1, caractérisé en ce que le mélange gazeux d'alimentation est introduit dans le lit après que la seconde étape de translation a été terminée par arrêt de l'écoulement dans le lit à partir du réservoir associé à l'autre extrémité du lit, et l'introduction du mélange gazeux d'alimentation dans le lit est interrompue avant le début de l'étape suivante d'élévation de pression.

3. Procédé selon la revendication 2, dans lequel la pression dans le lit est maintenue sensiblement constante pendant l'introduction de l'air d'alimentation.

4. Procédé selon l'une quelconque des revendications précédentes, dans lequel le mélange gazeux d'alimentation est de l'air dont la vapeur d'eau et l'anhydride carbonique ont été retirés.

5. Procédé selon l'une quelconque des revendications précédentes, caractérisé en outre en ce que chaque quantité élémentaire de gaz admise dans le lit est soumise en moyenne à au moins dix cycles de fonctionnement.

FIG.1.

FIG.4.

FIG.2.

FIG. 3.